# NEUE EUROPÄISCHE PATENTSCHRIFT

(11) **EP 0 185 367 B2**
(45) Veröffentlichungstag und Bekanntmachung des Hinweises auf die Entscheidung über den Einspruch: **24.03.1993**
(45) Hinweis auf die Patenterteilung: 04.04.1990
(21) Anmeldenummer: 85116132.3
(22) Anmeldetag: 18.12.1985
(51) Int. Cl.: B60R 22/42

(54) **Sicherheitsgurtsystem**
Safety belt system
Système de ceinture de sécurité

(30) Priorität: 21.12.1984 DE 3446857; 12.12.1985 DE 3543959
(43) Veröffentlichungstag der Anmeldung: 25.06.1986
(60) Teilanmeldung: 88118648.0
(73) Patentinhaber: Autoliv-Kolb GmbH & Co., D-85203 Dachau (DE)
(72) Erfinder: Ernst, Hans-Helmut, Dipl.-Ing., D-2061 Sülfeld (DE); Lochbihler, Edmund, Dipl.-Ing., D-8000 München 50 (DE)
(74) Vertreter: Lehn, Werner, Dipl.-Ing.

(56) Entgegenhaltungen:
- DE-A- 2 234 157
- DE-A- 3 001 758
- DE-A- 3 330 938
- DE-A- 3 417 877
- DE-A- 3 421 831
- FR-A- 2 511 320
- GB-A- 2 073 008
- GB-A- 2 085 709
- GB-A- 2 113 978
- GB-A- 2 126 876
- US-A- 3 814 346
- US-A- 4 241 886
- US-A- 4 323 204
- Uebereinkommen Vereinte Nationen, Regelung Nr. 16(1)

## Beschreibung

Die Erfindung bezieht sich auf ein Sicherheitsgurtsystem mit einem eine Sensor- und Steuerungsmechanik aufweisenden Aufroll- und Sperrmechanismus und einer ein gesteuertes Klemmteil aufweisenden Klemmvorrichtung zum Verhinderen eines weiteren Gurtbandauszuges vom Aufroll- und Sperrmechanismus, wobei das Klemmteil betriebsmäßig mit einer Relativbewegung des Aufroll- und Sperrmechanismus oder eines Teiles desselben zum Aufrollergehäuse, beispielsweise einer Hub- oder Drehbewegung einer Aufrollspule derart gekoppelt ist, daß durch diese Relativbewegung das Klemmteil in Klemmanlage bewegbar ist.

Wenn das Sicherheitsgurtband eines Sicherheitsgurtsystems, beispielsweise für Kraftfahrzeuge, mit einem Aufroll- und Sperrmechanismus versehen ist, von dem aus das Sicherheitsgurtband nach dem Durchlaufen einer Umlenkung als Schultergurt oder ggf. auch als Beckengurt am Körper eines Fahrzeuginsassen anliegt, und beispielsweise beim Auftreten eines Verkehrsunfalls oder einer anderweitig fahrzeugbedingten Verzögerung abrupt verzögert wird, so drückt der Körper des Fahrzeuginsassen gegen das Sicherheitsgurtband und ist bestrebt, dieses von der Spule des Aufroll- und Sperrmechanismus abzuziehen. In diesem Fall wird jedoch eine Drehbewegung der Spule verhindert, da der genannte Sperrmechanismus gurtband- und/oder fahrzeugsensitiv gesteuert in Aktion tritt. In solch einem Fall tritt normalerweise ein sogenannter "Filmspuleneffekt" auf, und zwar dahingehend, daß sich das Gurtband bei drehrichtungsgesperrter und die Zuglast des Gurtbandes aufnehmender Spule in einem gewissen Umfang dadurch abziehen läßt, daß sich die Gurtwicklungen auf der Spule näher aneinanderschieben. Die Gurtbandlagen können sich gegeneinander verschieben, bis der Gurtbandwickel fest aufgespult ist. Dieser Effekt bewirkt ein verzögertes Ansprechen des Sicherheitsgurtes, was sich nachteilig auf die Belastungshöhe der Insassen auswirkt.

Zur Vermeidung dieses Phänomens hat man bereits das Sicherheitsgurtband, ausgehend von der Spule, um vorgelagerte Umlenkwalzen gelegt, die mit einer Klemmbacke zusammenwirken. Diese Unlenkung hat jedoch den Nachteil einer erhöhten Reibung, insbesondere beim Abziehen des Sicherheitsgurtes von der Spule für das Anlegen des Sicherheitsgurtbandes. Man hat auch bereits eine Klemmvorrichtung im Bereich des Umlenkbeschlages vorgeschlagen (GB-PS 2 085 709). Die Klemmwirkung wird dabei durch den vom Körper des Fahrzeuginsassen auf das Sicherheitsgurtband ausgeübten Druck bewirkt.

Aus der DE-OS 2 234 157 (Fig. 6) ist es bekannt, eine Gurtbandklemmung dadurch vorzunehmen, daß im Zusammenhang mit dem lastaufnehmenden Sperren des Gurtaufrollers die Aufrollspule verschoben wird. Diese Verschiebung wird auf ein als Schwenkhebel ausgebildetes Klemmteil übertragen, wodurch dieses Klemmteil in Anlage an ein Stahlband gerät und dieses festklemmt. Allerdings gelangt dabei das Klemmteil nur entsprechend einer Linienberührung in Anlage an das Stahlband, was zu einerungünstigen Krafteinleitung dahingehend führt, daß die Klemmwirkung unzureichend ist. Außerdem ist die Komfortbeeinträchtigung, die sich aus der Aufwicklung eines Stahlseiles oder eines Stahlbandes ergibt, für den praktischen Einsatz nicht akzeptabel.

Das wichtigste Leistungsmerkmal eines Klemmers besteht in extrem kurzen Gurtauszügen, wenn auf das Gurtband eine Zugkraft ausgeübt wird, die das Ausmaß übersteigt, mit dem normalerweise für einen entsprechenden Komfort das Gurtband aus dem Gurt bandspeicher abgezogen werden kann, um beispielsweise den Sicherheitsgurt anzulegen oder bei angelegtem Sicherheitsgurt bestimmte Bewegungen durchzuführen, um Bedienungselemente im Kraftfahrzeug zu erreichen.

Sogenannte Aufrollklemmer, d.h. Klemmer, die mit einem Aufroll- und Sperrmechanismus zusammenarbeiten, sind beispielsweise aus der DE-OS 30 01 758, der DE-OS 31 24 188 und der DE-OS 33 30 938 bekannt.

Dabei sind bisher nur der Aufrollklemmer gemäß der DE-OS 31 24 188 und der DE-OS 30 01 758 realisiert worden. Beide Aufrollklemmer haben folgende, gravierende Nachteile. Sie benötigen eine starke Gurtbandumlenkung, und zwar zweimal 90° oder einmal 180°. Dadurch ergeben sich ungünstige Einzugs-Auszugs-Werte, also ein schlechter Bedienungskomfort. Die genannten bekannten Aufrollklemmer arbeiten alle so, daß sie für den Normalbetrieb (CS = 0,45 g, WS = 0,5 g) einen normalen Aufroller mit seinen Blockier- bzw. Sperrelementen arbeiten lassen und die Gurtbandklemmung nur einleiten, wenn eine höhere Belastung (z.B. bei einem Unfall) vorleigt. Das bedeutet, daß der Widerstand zur Einleitung einer Klemmung relativ groß ist, so daß durch die Blockier- bzw. Sperrelemente auch eine gewisse Last aufgebracht werden muß. Es erfolgt also stets eine lastaufnehmende Vorblockierung und erst später bei erhöhter Zugkraft das Klemmen durch den Aufrollklemmer. Diese erhöhte Zugkraft liegt im Zusammenhang mit der DE-OS 31 24 188 bei etwa 200 bis 250 N.

Aus der GB-A-2 073 008 ist ein Klemmer gemäß dem Oberbegriff des Anspruchs 1 bekannt, der unter Ausnutzung einer Umlenkung die vom Gurtband veranlaßten Zugkräfte aufnimmt, so daß eine weitgehend lastfreie, aus lichten Teilen bestehende Vorblockiereinrichtung vorgesehen sein kann. Bei einer durch bestimmte Beschleunigungswerte über einen Fahrzeugsensor oder einen Gurtbandsensor ausgelösten Vorblockierung erfolgt eine Klammung.

Es ist Aufgabe der Erfindung, ein Sicherheitsgurtsystem bzw. einen Gurtklemmer zu schaffen, bei dem mit einfachen konstruktiven Mitteln und gutem Bedienungskomfort ein extrem kurzer Gurtbandauszug im Sensorauslösungsfall gewährleistet ist, und zwar bereits bei niedrigen

Beschleunigungen ausgelösten Klemmungen mit schonender Anlage am Gurt band.

Diese Aufgabe wird erfindungsgemäß durch die Merkmale des Anspruchs 1 gelöst.

Durch die Erfindung wird erstmals ein Aufrollklemmer vorgeschlagen, der überhaupt keine im Unfall eine gewisse Last übertragende Sperrelemente im Aufroller mehr aufweist. Der erforderliche Widerstand, um durch den Gurtauszug eine Klemmblockierung einzuleiten, wird aus den ohnehin vorhandenen Sensor- und Steuerungsmechanikteilen aufgebracht, die aus Kunststoffteilen bestehen können und keine wesentliche Kraft aufnehmen. Gemäß der Erfindung wird somit erstmals eine Klemmertechnologie verwirklicht, die nicht nur im Notfall, also bei Vorliegen einer erhöhten Zuglast am Gurtband, eine Klemmblockierung einleitet, sondern die Klemm-Mechanik bei jeder Verzögerung über 0,45 g fahrzeugsensitiv (CS) oder 1,5 g gurtbandsensitiv (WS) in Klemmbereitschaft bringt. Führt z.B. ein Fahrzeug mit 0,5 g eine Kurvenfahrt durch, so lenkt der Sensor, beispielsweise eine Sensorkugel, aus und hebt eine Steuerklinke an. Allein dadurch ist die Klemmbereitschaft bereits sichergetellt. Entwickelt sich aus der Kurvenfahrt aber eine Notsituation - z.B. das Fahrzeug kippt in einen Graben - so wird durch den sich verlagernden Insassen das Gurtband abgezogen. Dieser Gurtbandauszug bewirkt nun unmittelbar über die formschlüssig aktivierte Sensor- und Steuerungsmechanik einen Hub der Aufrollspule und somit ein Heranführen des Klemmteils am Gurtband. Dieser Umstand, daß bereits bei niedrigen Beschleunigungen eine zwangsgesteuerte Klemmbereitschaft vorliegt (formschlüssiger Verband von Sensor über Steuerungsmechanik bis zum Klemmteil), bietet die Gewähr für extrem kurze Gurtbandauszüge im Unfall, weil bei niedrigst möglichen Gurtbandauszugskräften sodann eine unmittelbare Gurtklemmung eingeleitet wird. Dadurch kann sich ein Filmspuleneffekt, der ja schon bei kleinen Gurtkräften meßbar ist, von vorneherein unterbunden werden.

In vorteilhafter Ausgestaltung ist eine Rückstellfeder des Klemmteils in ihrer Federkraft nur so stark eingestellt, daß die genannte Klemmblockierung bei den genannten niedrigen Beschleunigungswerten unmittelbar einleitbar ist.

Zweckmäßigerweise ist ein gegenüber dem Gurtband angeordneter und auf Druck beaufschlagter Schwenkhebel mit einem darin drehbar gelagerten Klemmteil versehen. Hierbei kann zur Bewerkstelligung einer ganzflächigen Anlage der Klemmfläche des Klemmteiles am Gurtband das Klemmteil mit einem solchen Reibungswiderstand im Schwenkteil drehgelagert sein, daß das Klemmteil nach dem erstmaligen Anlegen seiner Klemmfläche an das Gurtband eine solche Winkelrelativstellung zum Schwenkhebel einnimmt und beibehält, daß das Klemmteil stets durch die ganze Klemmfläche mit dem Gurtband in Berührung gelangt. Das bewirkt einen schonenden Klemmeingriff.

Um einen weiter verbesserten schonungsvollen Eingriff zwischen Klemmteil und Gurtband zu gewährleisten, ist die Bewegungsübertragung zwischen dem Schwenkhebel und dem diese Bewegung auslösenden Aufroll- und Sperrmechanismus so gestaltet, daß sich die Klemmfläche des Klemmgliedes bei der Annäherung an das Gurtband in derselben Richtungskomponente wie die Bewegungsrichtung des Gurtbandes mit derselben Geschwindigkeit bewegt wie das Gurtband. Dadurch treten keine Relativbewegungen zwischen der Klemmfläche des Klemmteils und dem Gurtband auf, was zu Beschädigungen des Gurtbands führen könnte, und zwar ggf. immer im wesentlichen an derselben Stelle.

Das bewegliche Klemmteil ist auf seiner Klemmfläche mit einer Vielzahl von Greifzähnen versehen. Dabei kann das Klemmteil aus einem kraftaufnehmenden Körper und einer vorgelagerten, die Greifzähne tragenden Platte bestehen. Dadurch besteht die Möglichkeit, die Greiffläche materialmäßig an die jeweiligen Verhältnisse anzupassen, insbesondere hinsichtlich der Ausbildung der Greifzähne, beispielsweise wenn diese die Greifzähne tragende Platte als Spritzgußteil aus einem entsprechenden Kunststoffmaterial hergestellt wird. Das Klemmteil selbst kann dann aus einem solchen Material hergestellt sein, welches den entsprechenden eingeleiteten Kräften standhält.

Die Spitzen der Greifzähne sind vorzugsweise entgegen derAbzugsrichtung auf die Gurtbandfläche zu gerichtet, so daß ein besonders wirksames Greifen der Greifzähne gewährleistet ist. Dabei ist es für die Wirksamkeit des Greifvorganges bzw. des Klemmvorganges von Bedeutung, daß die Hinterschneidungsfläche der Greifzähne mit der Normalen auf die Gurtbandfläche einen besonderen Winkel einschließt. Dieser Winkel soll vorzugsweise 3 bis 10° betragen.

Auch die Höhe der Greifzähne ist von großer Bedeutung; wird sie auf 2/3 der Gurtbanddicke ausgelegt (= 0,8 mm Höhe bei Dicke des Gurtbandes von 1,2 mm), so wird noch gewährleistet, daß die Zähne unter Last (und komprimiertem Gurtband) nicht ganz durchdrücken und somit die Gegendruckfläche nicht berühren.

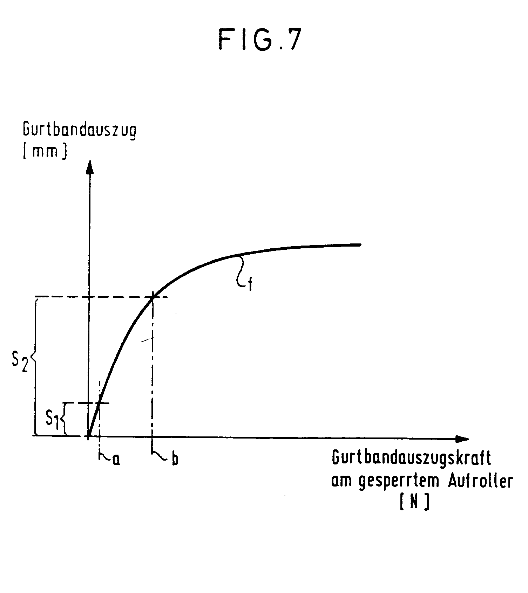

Die Greifzähne können zweckmäßigerweise eine asymmetrische Pyramidenform aufweisen und die Spitzen der Greifzähne in den Zahnreihen können versetzt hintereinander angeordnet sein, wobei der in Fig. 7 definierte Winkel 5 ca. 20° beträgt.

Insbesondere ist es von Vorteil, wenn die Ausbildung, Ausrichtung und Anordnung der Greifzähne an den jeweiligen strukturellen Aufbau des Gurtbandes angepaßt ist, insbesondere mit dem Abstand ihrer Zahnreihen an die Lage der Schuß- und Kettfäden des gewebten Gurtbandes. Insbesondere entspricht der Zahnreihenabstand dem Abstand der Schußfäden.

Um den Eingriff zwischen der mit den Zähnen versehenen Klemmfläche und dem Gurtband bei möglichst schonender Klemmung des Gurtbandes weiter zu erhöhen, sind die Greifzähne in einer Ebene parallel zur Gurtbandfläche in einem spitzen Winkel zur Gurtbandlaufrichtung ausgerichtet, vorzugsweise in einem Winkel von 20 Grad. Wenn im Zusammenhang damit senkrecht zur Gurtbandlaufrichtung in der Klemmflächenebene ein Freiraum vorgesehen ist, so führt dies zu einem Halbformschluß der Zahne mit den lastaufnehmenden Kettfäden, da sich die Kettfäden mäanderartig geschlängelt zwischen die Zähne setzen und in die Freiräume hineinquetschen können.

Wenn die Zahnhöhe der Greifzähne in Richtung entgegen der Abzugsrichtung des Gurtbandes zunimmt, wobei die ersten drei Reihen zunehmend kleiner sein können als die übrigen Zähne, wobei in der genannten Richtung die Greifzähne der ersten Reihe eine Höhe von 40%, die der zweiten Reihe eine von 50%, die der dritten Reihe eine von 60% und die der restlichen Reihen eine gleichbleibende Höhe von 2/3 der Gurtbanddicke haben können, so ergibt sich daraus eine höhere Belastungsfähigkeit beim Unfall an der Stelle des größeren Kraftangriffes. Hierzu kann die Breite der von den Greifzähnen besetzten Klemmfläche normal zur Gurt bandtaufrichtung in Gurtbandlängsrichtung abnehmend ausgebildet sein.

Das Klemmteil kann an den Rändern eine Materialdünnung aufweisen, damit sich das Klemmteil durch Abbiegen an dieser Stelle der letztlich nicht vermeidbaren Durchwölbung der Gegendruckwange anpaßt. Dadurch erfolgt eine gleichmäßigere Krafteinwirkung auf das Gurtband bei hoher Last, verbunden mit einer Kantenschonung, wobei keine Neigung zum Einrasten an dieser Stelle besteht.

Vorteilhafterweise ist in der mit Greifzähnen versehenen Klemmfläche des Klemmteils eine vorstehende Leiste aus Gummi oder dergleichen Material eingelegt, die sich in Gurtbandlaufrichtung über die gesamte Klemmfläche erstreckt. Diese Leiste gelangt zuerst mit dem Gurtband in Eingriff und wird bei einer gewissen Kraftaufwendung verformt, so daß die Zähne selbst in Eingriff gelangen können. Ein besonders günstiger Eingriff ergibt sich dann, wenn im Zusammenhang damit die Gegendruckfläche zum Gurtband hin ballig ausgeführt ist. Bei hoher Kraftaufbringung verformt sich diese Balligkeit so, daß eine ebenflächige Gegendruckfläche zur Auswirkung kommt.

Durch die zuvor dargelegten weiteren Ausgestaltungen der Erfindung ist nicht nur der Aufbau wegen der geringeren Anzahl von Teilen einfacher, die Herstellung preiswerter und eine höhere Ausfallsicherheit gegeben, sondern es erfolgt eine schnellere Umsetzung des Sensorimpulses in einer Gurtbandklemmung unter Umgehung einer lastaufnehmenden Vorblockierung über extra Sperrelemente, und zwar bei so weitgehender Schonung des Gurtbandes durch den Klemmvorgang auch dann, wenn der erfindungsgemäße Klemmer bei jeder Sensierung (CS = 0,45 g und WS = 1,5 g) eine Klemmung in das Gurtband bewerkstelligt, was während des Einsatzes des Sicherheitsgurtes schätzungsweise ca. tausendmal und in den Zulassungsund Freigabedauertests zwanzigtausendmal erfolgt. Dies realisiert sich insbesondere im Sinne der Weiterbildung der im Anspruch 1 angegebenen Lehre durch die genannte Ausgestaltung der Greifzähne (geometrische Daten) im Zusammenhang mit dem selbstjustierenden Klemmteil und der synchronisierten Annäherung des Klemmteils an das Gurtband.

In diesem Zusammenhang ist nochmals darauf hinzuweisen, daß der Aufroller unterhalb der Klemmermechanik keinerlei extra Sperr-/Blockierelemente enthält, sondern eine Sensoraktivierung wird direkt von der Steuerungsmechanik in eine Klemmung, bzw. Klemmbereitschaft, umgesetzt. Die Gurtklemmung erfolgt so schonend, daß sie auch nach zwanzigtausend Klemmungen noch in der Lage ist, die volle Umfallast im Crash aufzunehmen.

Für eine besonders kompakte und einfache Ausgestaltung der Teile können das bewegliche bzw. drehbar am Schwenkhebel angebrachte Klemmteil und der Schwenkhebel als Aluspritzgußteile oder als Kunststoffsprizgußteile ausgebildet sein. Im Zusammenhang damit ist es dann von Vorteil, wenn die Drehachse als intergrierter Bestandteil des beweglichen Klemmteils oder des Schwenkhebels ausgebildet ist und dann eine entsprechende Ausnehmung nur Aufnahme der Drehachse von dem ensprechend anderen Teil gebildet wird. Im Zusammenhang damit kann dann bei entsprechender konstruktiver Ausgestaltung der Öffnungsrand derAusnehmung dem Halteanschlag bilden. Diese Teile sind dann vorzugsweise Teile von Strangpreßprofilen.

Bei dieser kompakten und einfachen Ausgestaltung der Teile ist bevorzugt die Drehachse eine teilzylindrische Stange und die Ausnehmung eine entsprechend angepaßte, an mindestens einem Ende offener, längsgeschlitzter Hohlzylinder. Dies hat zur Folge, daß die Teile einfach miteinander in Verbindung gebracht werden können, indem die teilzylindrische Stange von der offenen Seite des Hohlzylinders in diesen entlang der Drehachse eingeschoben wird. Man spart so eine Achse als Extrabauteil.

Damit das Klemmteil ohne Bruchgefahr höhere Kräfte aufnehmen kann, ist das Klemmteil mit einem der Klemmfläche entgegengesetzt angeordneten, konvex gekrümmten, kugeligen oderteilzylindrischen Schwenklager versehen, das eine Kreisumfangserstreckung von gleich oder weniger 180 Grad hat und mit einer konkaven, teilzylindrischen Schwenklagerfläche des Schwenkhebels im Eingriff steht, wobei eine am Schwenkhebel festgelegte Klemmteilfeder am Klemmteil angreift. Dabei kann die Klemmteilfeder um eine Angriffstelle am Klemmteil geführt sein und sich an einer festen Gehäusestelle abstützen. Somit erfüllt diese Feder eine Doppelfunktion und einerseits hält sie das Klemmteil mit den genannten Lagerflächen zusammen. Andererseits dient die Feder als Lösefeder für das Klemmteil außer Eingriff mit dem Gurtband, wenn die Klemmung nicht mehr erwünscht ist.

Wenn die das Klemmteil haltende Feder an einer Stelle am Klemmteil angreift, die auf der Drehachse des Klemmteils liegt, dann übt die Feder auf das Klemmteil kein Drehmoment aus, so daß bei entsprechender Gestaltung des Reibungswiderstandes zwischen Klemmteil und Schwenkhebel das Klemmteil die gewünschte Drehstellung einnehmen kann, ohne darin von der das Klemmteil am Schwenkhebel haltenden Feder beeinträchtigt zu sein.

Für eine kurze und preiswerte, sowie leichte Gestaltung der Achse des Schwenkhebels ohne besondere Befestingungsteile sowie eine reibungsarme Fixierung des Schwenkhebels ohne seitliches Scheuern am Gehäuse kennzeichnet sich eine weitere Ausgestaltung der Erfindung dadurch aus, daß der Schwenkhebel mittels einer Achse in parallelen Gehäusewänden ohne Berührung derselben gelagert ist und in einem Gehäusedeckel ein Mittenfixierungsvorsprung ausgebildet ist, der in eine entsprechende Ausnehmung des Schwenkhebels eingreift, und daß die Achse gegen axiales Verschieben durch den Gehäusedeckel gesichert ist. Für eine möglichst leichte und kostengünstige Ausführung des Schwenkhebels und eine gleichzeitige einfache Montage ist der Schwenkhebel dahingehend weiter ausgestaltet, daß der Schwenkhebel beidseits einstückig mit diesem ausgebildete Lagerzapfen aufweist, die mit Schrägen versehen sind und in entsprechende Bobrungen von parallelen Gehäusewänden durch Auseinanderspreizen der Wände einrastbar sind, und daß diese Gehäusewände ein anschließend angebrachter Abstandhalter verbindet und den gewünschten Abstand sicherstellt.

Damit beim Aufspreizen der Gehäusewände die Zapfen besser in die Wandöffnungen einschnappen können, wird nach dem Einschnappen in die dann größeren Öffnungen von außen je eine Buchse eingesetzt, in der dann die Zapfen tatsächlich lagern. Diese Buchsen können eine spezielle Oberfläche aufweisen und schaffen somit bessere Lagereigenschaften.

Um den genannten Synchronisationseffekt und die entsprechenden Übersetzungsverhältnisse für die Bewegungsübertragung und den Schwenkhebel besser gestalten zu können, ist zwischen dem die genannte Bewegung des Schwenkhebels auslösenden Aufroll- und Sperrmechanismus und dem Schwenkhebel ein gehäuseseitig drehbar gelagerter Betätigungshebel angeordnet, der in seiner Ruhelage ein freies Drehen des Aufroll- und Sperrmechanismus zuläßt. Ein entsprechendes Übersetzungsverhältnis läßt sich auch über die Auslegung und Anordnung eines am Schwenkhebel befindlichen Stößels erreichen.

Die genannte Gurtbandführung zwischen Klemmteil und Aufroll- und Sperrmechanismus Sowie auf der dern Aufroll- und Sperrmechanismus entgegengesetzten Seite des Klemmteils sorgt dafür, daß das Gurtband im Klemmbereich ganz definiert geführt wird, und zwar unabhängig vom Wickeldruchmesser bzw. von der Gurtbandauszugsrichtung, so daß es in Ruhelage nicht mit den Greifzähnen in Berührung gelangt.

Die Erfindung wird nachfolgend anhand der in den Zeichnungen rein schematischen Ausführungsbeispiele näher erläutert. Es zeigt:
Fig. 1 eine Klemmvorrichtung mit einem Schwenkhebel und einem daran drehbar gelagerten Klemmteil,
Fig. 2 eine der Fig. 1 vergleichbare Ansicht einer abgewandelten Klemmvorrichtung mit integrierter Bauweise,
Fig. 3 eine Detailansicht einer weiteren, abgewandelten Klemmvorrichtung, bei der das Klemmteil mit einer Feder gegen einen Anschlag in einer Ausgangslage gedrückt wird,
Fig. 4 eine der Fig. 3 ähnliche Ansicht, jedoch mit der Darstellung einer abgewandelten Ausführungsform, bei der die Feder im Bereich der Drehachse des Klemmteils angreift,
Fig. 5 eine schematische Seitenansicht einer anderen Betätigungsart des Schwenkhebels der Klemmvorrichtung über den hier nur schematisch dargestellten Aufroll- und Sperrmechanismus,
Fig. 6 eine detailliertere perspektivische Ansicht eines mit einem fahrzeugsensitiven und gurtbandsensitiven snsorversehenen Aufroll- und Sperrmechanismus ohne Vorblockierung,
Fig. 7 eine diagrammartige Darstellung des Gurtbandauszuges im Verhältnis zur Gurtbandauszugskraft,
Fig. 8 eine Draufsicht auf einen Teil der Lagerung des Schwenkhebels im Gehäuse,
Fig. 9a eine perspektivische Explosionsansicht eines Teils der Lagerung des Schwenkhebels im Gehäuse,
Fig. 9b eine Schnittansicht durch den in Fig. 9a perspektivisch dargestellten Lagerbereich,
Fig. 10 eine Teilschnittansicht durch eine andere Ausführungsform der Schwenklagerung des Schwenkhebels,
Fig. 11 a eine Schnittansicht durch den Klemmbereich,

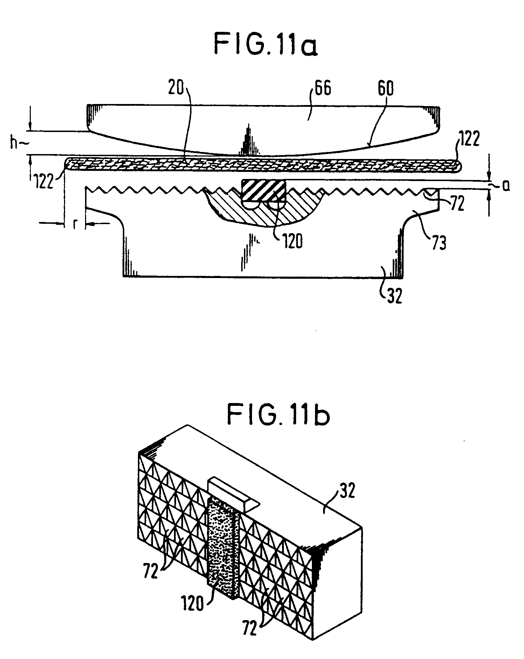

Fig. 11 eine perspektivische Ansicht der Klemmfläche des Klemmteils mit einer eingelegten Gummileiste,

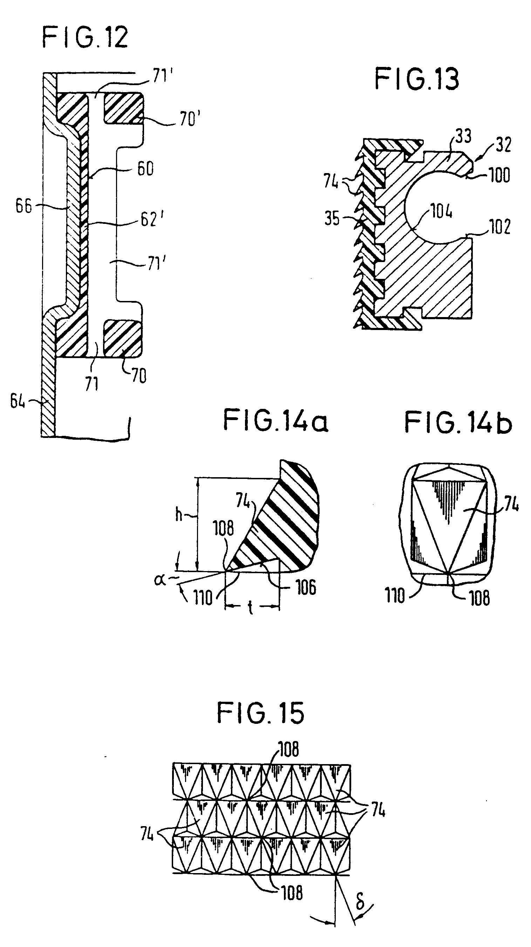

Fig. 12 eine Einzelschnittansicht der Gegendruckfläche,
Fig. 13 eine andere Ausführungsvariante des beweglichen Klemmteils,
Fig. 14a eine Schnittansicht durch einen Greifzahn,
Fig. 14b eine Draufsicht auf einen Greifzahn,
Fig. 15 eine Draufsicht auf eine Reihe von Greifzähnen der Klemmfläche des beweglichen Klemmteils,

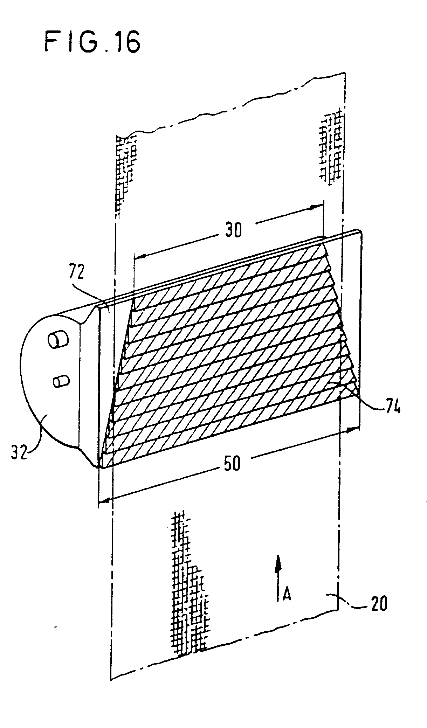

Fig. 16 eine perspektivische Ansicht der Klemmfläche des Klemmteils einer besonderen Zahnanordnung,

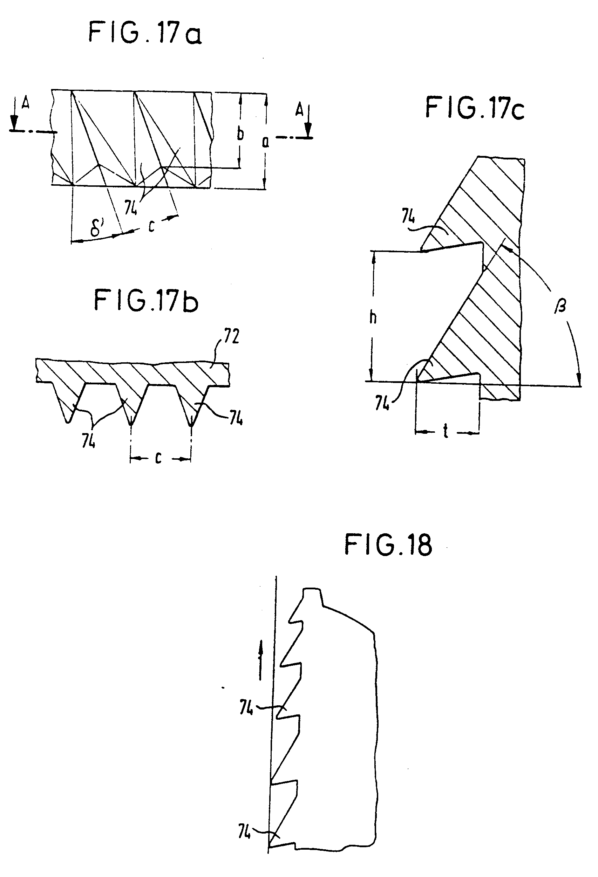

Fig. 17a eine perspektivische Ansicht eines Greifzahnes mit einer anderen Ausrichtung,
Fig. 17b eine Teilschnittansicht durch die Zahnanordnung der Zähne gemäß Fig. 17a,
Fig. 17c eine Schnittzeichnung durch die Greifzähne in Gurtlaufrichtung,
Fig. 18 ebenfalls eine Schnittzeichnung durch die Greifzähne in Gurtlaufrichtung, jedoch mit einer anderen Zahnhöhenanordnung,

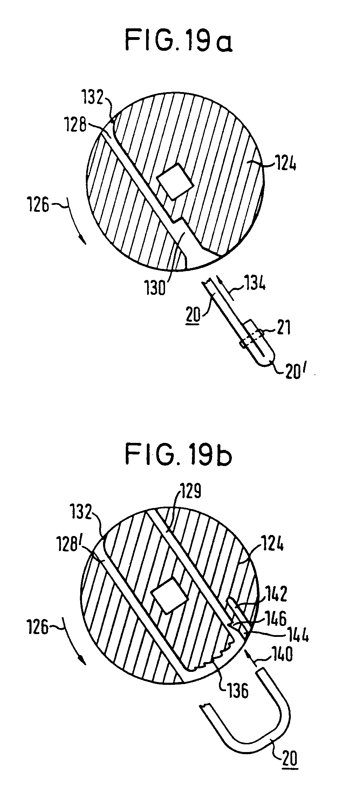

Fig. 19a eine Querschnittansicht durch einen Wickelspulenkern des Aufrollers mit einer Gurtbandbefestigungsart, und
Fig. 19b ebenfalls eine Querschnittsansicht durch den Kern der Wickelspule eines Aufrollers mit einer anderen Befestigungsart.

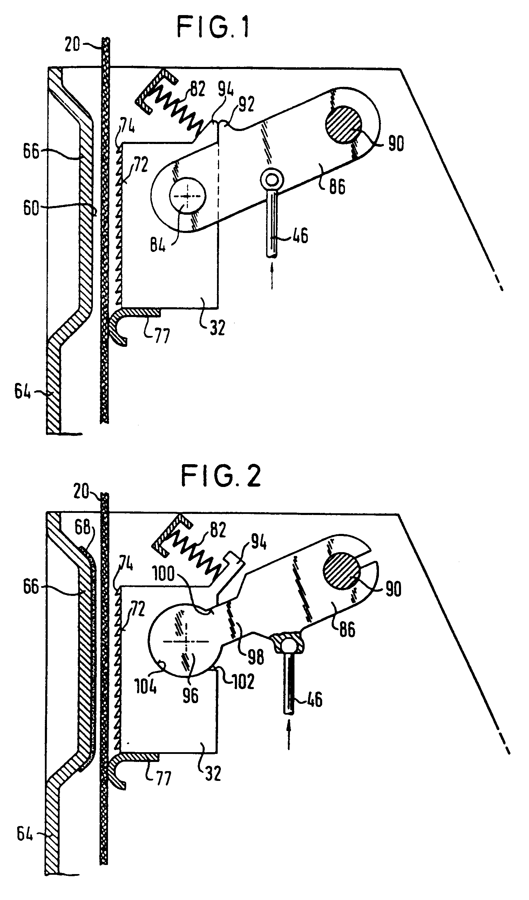

Die in Fig. 1 dargestellte Klemmvorrichtung besteht aus einem Schwenkhebel 86, der auf einer gehäusefesten Schwenkachse 90 gelagert ist. Am der Schwenkachse entgegengesetzten Ende des Schwenkhebels 86 ist auf einer Drehachse 84 ein Klemmteil 32 drehbar gelagert, welches durch eine auf einen Ansatz 94 des Klemmteils 32 drückenden Rückstellfeder 82 gegen einen Halteanschlag 92 des Schwenkhebels gedrückt wird, und so in einer bestimmten Ausgangslage gehalten wird. Am dem Halteanschlag 92 entgegengesetzten Ende des Schwenkhebels 86 befindet sich eine Steuerstange 46, die in Richtung des Pfeiles in Fig. 1 und 2 betätigt wird, um das Klemmteil 32 in Anlage am Gurt band 20 zu bringen. In der Ausgangslage liegt das Klemmteil 32 an einem zugleich als Führung für das Gurtband ausgebildeten Anschlag 77 an.

Dem Klemmteil 32 gegenüberliegend, aber auf der anderen Seite des Gurtbandes 20, befindet sich eine von einer Sicke 66 der Gehäusewand 64 gebildete Gegendruckfläche 60, die bevorzugt eine Oberfläche mit besonders geringem Reibungsbeiwert hat. Dies begünstigt das Lösen des Sicherheitsgurtbandes 20 nach einem vollzogenen Klemmvorgang. Gemäß Fig. 2 ist auf der Innenseite der Sicke 66 ein Materialband 68 appliziert, welches beispielsweise ein Polytetrafluoräthylenband mit einem besonders geringen Reibungsbeiwert ist.

Das Klemmteil 32 ist an seiner Klemmfläche 72 mit einer Vielzahl von Greifzähnen 74 versehen.

Der Vorteil einer Achse 84, 96 besteht in der vollen Anpassungsfähigkeit an die reale Neigung der Gegendruckfläche 60, so daß unter Last eine Unabhängigkeit von Toleranzen und Verformungen besteht.

Die in Fig. 1 und 2 dargestellte Ausgangsruhelage des Klemmteils 32 kann so eingestelltsein, daß in dieser Ruhelage die Klemmfläche 72 zum Gurtband in Gurtbandbewegungsrichtung einen Voreinstellwinkel derart einnimmt, daß beim Heranschwenken des Klemmteils 32 an das Gurtband sofort die gesamte Klemmfläche mit den Greifzähnen in Anlage an das Gurtband gelangt.

Die Ausführungsvariante gemäß Fig. 2 unterscheidet sich von der in Fig. 1 dadurch, daß die Drehachse 84 als teilzylindrisches integriertes Teil 96 des Schwenkhebels 86 ausgebildet ist, welches durch einen Hals 98 mit dem eigentlichen Körper des Schwenkhebels 86 in Verbindung steht. Dieser Hals 98 bildet den Halteanschlag, an dem eine Anschlagfläche 100 zur Anlage kommt. Diese Anschlagfläche 100 wird von einem Öffnungsschlitzrand 102 gebildet, welcher eine hohlzylindrische Ausnehmung 104 begrenzt. Diese hohlzylindrische Ausnehmung 104 ist an zumindest einem Längsende offen, so daß die teilzylindrische Drehachse 96 von dieser Seite in die Ausnehmung eingeschoben werden kann.

Eine besondere Ausführungsvariante des beweglichen Klemmteils 32 ist in Fig. 13 dargestellt. Gemäß dieser Ausführungsvariante ist das Klemmteil zweiteilig ausgebildet, und zwar besteht das Klemmteil 32 aus einem kraftaufnehmenden Grundkörper 33 und einer vorgelagerten Zahnplatte 35 mit den Zähnen 74. Diese Zähne 74 sind in Fig. 14a, 14b und 15 mehr im einzelnen dargestellt.

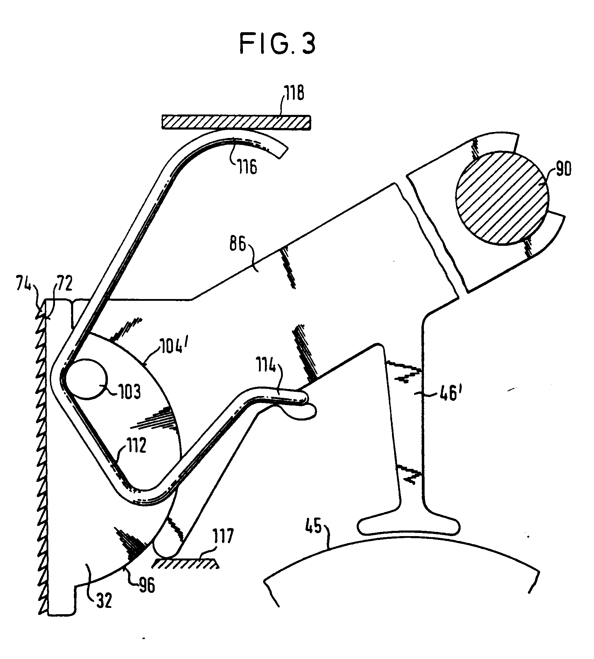

Entsprechend der Darstellung in Fig. 3 ist der Schwenkhebel 96, welcher um die Schwenkachse 90 schwenkbar ist, mit einem integriert ausgebildeten Stößel 46' versehen, welcher normalerweise in einem Abstand von ca. 0,3 bis 0,5 mm von der betätigenden Spule 45 des Aufrollers liegt, damit diese bei normalem Gurtbandabzug frei drehbar ist, wenn der Schwenkhebel an einem gehäuseseitigen Anschlag 117 anliegt. An dem der Schwankachse 90 entgegengesetzten Ende ist der Schwenkhebel 86 mit einer konkaven, teilzylindrischen Ausnehmung 104' versehen. Diese Ausnehmung steht mit einer konvexen, teilzylindrischen Erhebung des Klemmgliedes 32 im Eingriff, wobei die Umfangserstreckung dieser kreisförmigen, teilzylindrischen Erhebung 96 gleich oder weniger 180 Grad beträgt. Normalerweise würde daher das Klemmteil aus der Ausnehmung 104' herausfallen. Um dies zu vermeiden, ist das Klemmteil auf beiden Seiten mit einem Zapfen 103 versehen, um den eine Klemmteilfeder 112 gelegt ist, die mit einem Ende 114 am Schwenkhebel befestigt ist und sich mit dem anderen Ende 116 an einem Gehäuseteil 118 abstützt. Diese Abstützung am Gehäuseteil bewirkt eine Vorspannung dahingehend, daß nach dem Klemmen der Schwenkhebel 86 sich aus dem Klemmeingriff mit dem Gurtband lösen kann. Somit vollzieht diese Feder eine Doppelfunktion. Die konvexe Ausbildung der Erhebung 96 bewirkt, daß sich das Klemmteil genau auf das Gurtband bzw. die Klemmfläche ausrichten kann. Es ist selbstanpassend, insbesondere auch bei Deformation unter Last. Diese Anpassungsfähigkeit sorgt dafür, daß der Klemmdruck optimal auf die ganze Klemmfläche verteilt wird.

Obwohl dies nicht dargestellt ist, so kann der Stößel 46' auch als Scheibe ausgebildet sein, die auf der Spule 45, abrollen kann, damit dort ein geringer Reibungsverschleiß entsteht, wenn diese Scheibe drehbar am Schwenkhebel gelagert ist.

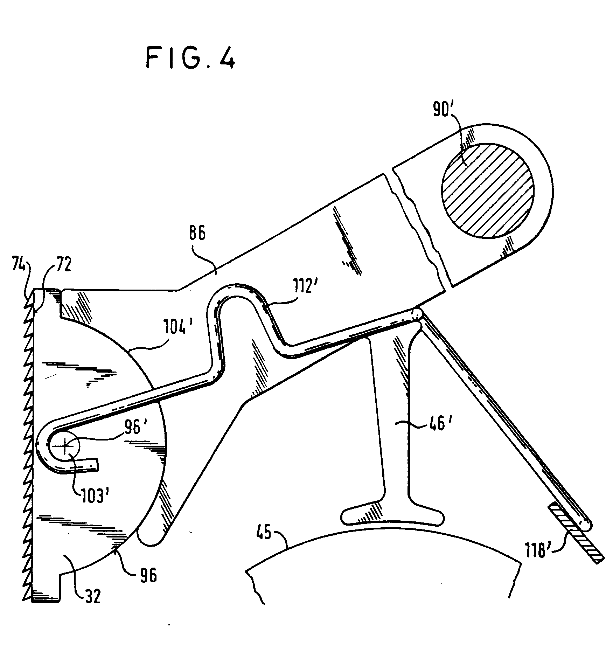

Die Ausführungsform gemäß Fig. 4 unterscheidet sich von der gemäß Fig. 3 dadurch, daß nicht nur die Klemmteilfeder 112' an einer anderen Stelle 118' gehäusefestgelagert ist, sondern daß diese Feder auch am Klemmteil an einem Achsstummel 103' angreift, wo sich die Drehachse 96' des Klemmteils 32 befindet. Somit vollzieht die Klemmteilfeder 112' nur eine Funktion dahingehend, das Klemmteil 32 in der Mulde 104' des Schwenkhebels 86 zu halten. Zwischen der Muldenfläche 104' und der Oberfläche 96 des Klemmteils besteht eine solche Reibung, daß das Klemmteil 32 nach einer Verdrehung und nach einem anschließenden Loslassen in der entsprechenden Stellung verbleibt, ohne daß die Klemmteilfeder ein entgegenwirkendes Drehmoment auf das Klemmteil ausübt. Dadurch besteht die Möglichkeit, das Klemmteil zanächst einmal beliebig einzustellen. Bei einem erstmaligen Heranführen des Klemmteils 32 an das Gurtband richtet sich das Klemmteil automatisch so aus, daß die gesamte Klemmfläche 72 mit den Zähnen 34 satt und ganzflächig am Gurtband anliegt. Wird nun der Schwenkhebel 86 mit dem Klemmteil 32 wieder vom Gurtband wegbewegt, so bleibt das Klemmteil 32 in einer solchen Winkelrelativstellung zum Schwenkteil 86, daß bei einem erneuten Heranschwenken des Schwenkteils 86 die gesamte Klemmfläche gleichzeitig in Anlage an das Gurtband gelangt. Natürlich besteht auch die Möglichkeit, in Abhängigkeit von der Ausgangslage des Schwenkhebels 86 eine bestimmte Winkelstellung voreinzustellen, damit dieses Ergebnis erzielt wird.

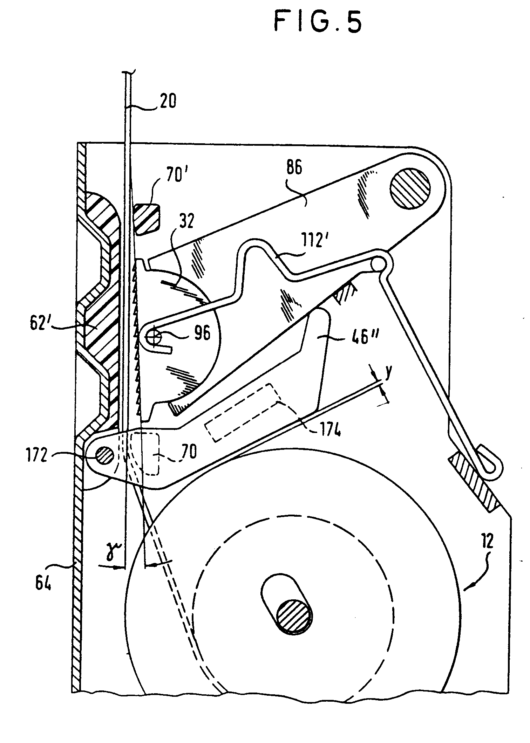

Wie bereits ausgeführt wurde, soll die Bewegungsinduzierung auf den Schwenkhebel 86 so erfolgen, daß sich das Klemmteil 32 hinsichtlich der Bewegungskomponente in Zugrichtung des Gurtbandes bei der Annäherung an das Gurt band mit derselben Geschwindigkeit bewegt, wie das Gurtband. Durch diesen Synchronisierungseffekt kommt es zu keiner Relativbewegung zwischen der gezahnten Greiffläche des Klemmteils 32 und dem Gurtband, was einen sehr schonenden Eingriff mit dem Gurtband zufolge hat. Um in der Gestaltung des Übersetzungsverhältnisses für den Schwenkhebel zur Erzielung des Synchronisationseffektes variabler zu sein, ist das Betätigungselement für das Zusammenwirken mit dem Aufroll- und Sperremechanismus 12 nicht einstückig mit dem Schwenkhebel 86 verbunden, wie dies beispielsweise in Fig. 3 dargestellt ist. Stattdessen sind hier gemäß Fig. 5 beispielsweise zwei Betätigungshebel 46" gehäuseseitig im Lager 172 schwenkgelagert, wobei die Hebel durch eine gestrichelt dargestellte Stange 174 miteinander verbunden sind. Durch die Ausgestaltung dieses Betätigungshebels können die Hebelverhältnisse genau eingestellt werden. In der Grundstellung des Betätigungshebels 46" verbleibt ein Spiel y von ca. 0,5 mm gegenüber dem Aufroll- und Sperrmechanismus, damit dieser sich im Normalbetrieb frei drehen kann. In Fig. 5 verdeutlicht der winkel 8 den Voreinstellwinkel der Klemmfläche des Klemmteils 32 in der Ausgangslage so, daß beim Heranschwenken des Klemmteils and das Gurtband stets die gesamte Klemmfläche in Anlage an das Gurtband gelangt.

Von Bedeutung ist auch der Winkel des Schwenkhebels mit dem Klemmteil zur Laufrichtung des Gurtbandes. Um hier einen optimalen und gut wirksamen Selbstverstärkungseffekt zu erzielen, sollte der Winkel in einem Bereich von ca. 20 bis 40 Grad eingestellt sein. Es handelt sich dabei um den Winkel zwischen der Normalen durch die Schwenkachse des Schwenkhebels zum Gurtband und der Linie durch die Schwenkachse des Schwenkhebels und der Klemmfläche des Klemmteils. Ist der Winkel zu groß, so tritt kein Selbstverstärkungseffekt ein, und es ergibt sich ein Gurtschlupf. Eine sehr hohe Reibung in der Klemmteilfläche ist erforderlich, um überhaupt eine Klemmung zu erreichen, wenngleich auch keine Probleme bei der Deblockierung entstehen und geringere Druckkräfte entwickelt werden. Ist der Winkel dagegen zu klein, so ist zwar ein sehr guter Selbstverstärkungseffekt und kein Gurtbandschlupf gegeben. Auch ist keine hohe Reibung in der Klemmfläche erforderlich. Jedoch bestehen erhebliche Probleme bei der Deblockierung und es entwickeln sich sehr hohe Druckkräfte, so daß sich der Schwenkhebel, der als Druckhebel wirkt, festklemmt.

Die untere und/oder die obere Gurt bandführung 70, 70' können auch als Rollen ausgeführt sein, um die Reibung zu vermindern.

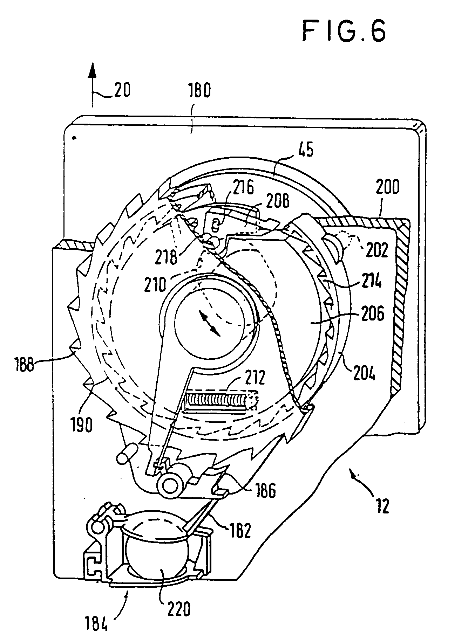

Fig. 6 zeigt ein Beispiel eines Aufroll und Sperrmechanismus als Gurtspeicher. Man erkennt besonders gut den Zusammenbau der Steuerteile, wobei die Darstellung auf einen linken Rahmenschenkel 180 und des daneben geführten linken Flansches 45 der Welle beschränkt ist. Dabei ist der Gurtaufroller in Ruhestellung gezeigt. Ein Impulshebel 182 des fahrzeugsensitiven Sensors 184 (CS) liegt an der Unterseite einer Steuerklinke 186, die in eine Außenverzahnung 188 eines Steuerrades 190 eingreifen kann. Der an sich vorhandene Zahnkranz der Wellenverzahnung, der sich ansonsten in der Ruhestellung außer Eingriff mit einer gehäuseseitigen Verzahnung befindet, ist ebensowenig vorhanden wie die gehäuseseitige Verzahnung. Die wellenseitige Verzahnung ist hier ersetzt durch die den Stößel 46 oder 46' betätigende Scheibe 45. Eine Mechanikgrundplatte 200, in der sich ein Lagerzapfen 202 als Drehpunkt für eine Steuerscheibe 204 befindet, ist gestrichelt dargestellt. Die gesamte Steuerscheibe 204 mit dem darin geführten Steuerrad 190 und einer Zwischensteuerscheibe 204 und einer am Steuerrad 190 angeordneten Trägheitsscheibe 206 wird nach erfolgter Sperrung zwischen Steuerscheibe 204 und Steuerrad 190, die wahlweise durch die fahrzeugsensitive Steuerklinke 186 oder aber auch durch eine gurtbandsensitive Klinke 208 ausgelöst werden kann, um die Lagerzapfen 202 in einem Langloch 210 in der Mechanikgrundplatte 200 aus der in Fig. 2 dargestellten Ruhelage angehoben, um über die Scheibe 45 und den Stößel 46 oder 46' den Schwenkhebel 86 und somit das Klemmteil 32 anzuheben und die Klemmfläche 72 in Anlage an das Gurtband 20 zu bringen. Dies bedeutet, daß im Gurtaufroller 12 keine Vorblockierung erfolgt, sondern nur durch die genannte Hubbewegung eine sofortige Aktivierung des Klemmers.

Die zwischen der Trägheitsscheibe 206 und dem Steuerrad 190 in einer entsprechenden Aussparung eingespannte Druckfeder 212 sorgt dafür, daß in der Ruhelage gemäß Fig. 6 die gurtbandsensitive Klinke 208 außer Eingriff mit einer Innenverzahnung 214 der Steuerscheibe 204 bleibt. Erst wenn infolge des über ein gewisses Maß hinausgehende Gurtbandabzuges die Trägheitsscheibe 206 in ihrer Bewegung hinter der Bewegung des Steuerrades 190 zurückbleibt, wird unter Überwindung der Kraft der Druckfeder 212 eine Relativbewegung zwischen Trägheitsscheibe 206 und Steuerrad 190 erreicht, durch welche die Klinke durch den gegenseitigen Versatz zwischen einem Stift 216 auf der Trägheitsscheibe 206 und einem Lagerzapfen 218 auf dem Steuerrad 190 nach außen in die Innenverzahnung 214 der Steuerscheibe 204 verschwenkt.

Somit beinhaltet der in Fig. 6 dargestellte Gurtaufroller einen fahrzeugsensitiven Sensor mit einer Kugel 220 und einen gurtbandsensitiven Sensor, die unabhängig voneinander tätig werden können.

Wie bereits ausgeführt worden ist, bietet der Umstand, daß bereits bei niedrigen Beschleunigungen eine zwangsgesteuerte Klemmbereitschaft vorliegt, die Gewähr für extrem kurze Gurtauszüge im Unfall, weil bei niedrigstmöglichen Gurtauszugskräften eine ummittelbare Gurtklemmung eingeleitet wird. Dadurch kann ein Filmspuleneffekt, der ja schon bei kleinen Gurtkräften meßbar ist, von vorneherein unterbunden werden. Dies ist bei den vorgeschlagenen Aufrollern des Standes der Technik nicht so, weil diese eine Gurtklemmung erst bei Vorliegen einer erhöhten Gurtkraft einleiten. Das bedeutet zwangsläufig, daß sie bereits einen relativ großen Anteil an Filmspuleneffekt durchgelassen haben, ehe sie das Gurtband sicher klemmen. Dies ergibt sich aus der diagrammartigen Darstellung in Fig. 7. Diese Fig. 7 zeigt den Gurtauszug in Abhängigkeit von der Gurtauszugskraft F am gesperrten Aufroller durch die Kurve f. Die Strichpunktierte Linie b zeigt die Verhältnisse entsprechend dem Stand der Technik und die gestrichelte Linie a die Verhältnisse bei der vorliegenden Erfindung. Beim Stand der Technik erfolgt gemäß der strichpunktierten Linie b das Klemmen erst bei einer erhöhten Gurtbandauszugskraft, so daß durch den Filmspuleneffekt bis dahin ein Gurtbandauszug in der Größenordnung S2 stattgefunden hat. Bei der Erfindung jedoch erfolgt das Klemmen bereits an der Stelle a direkt nach der Aktivierung der Sensor- und Steuerungsteile ohne vorheriges lastaufnehmendes Blockieren im Aufroller, so daß nur ein Gurt bandauszug in der Größenordnung S1 auftritt.

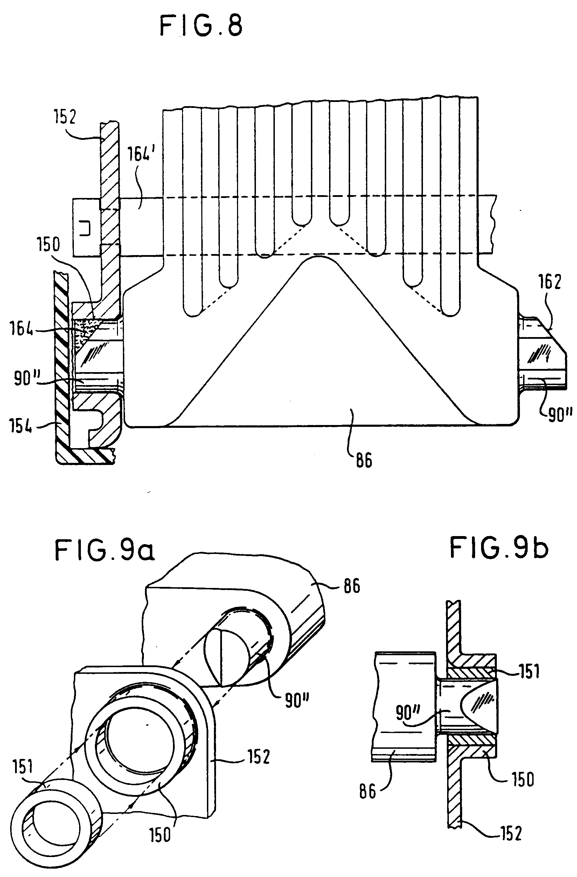

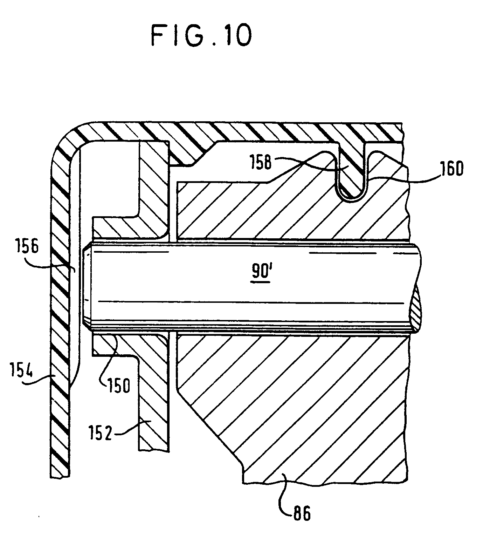

Der Schwenkhebel 86 gemäß der Ausführungsform in Fig. 10 weist eine einfache durchgehende Achse 90' auf. Diese Achse ist auf beiden Seiten, wobei in Fig. 10 nur eine Seite dargestellt ist, in Öffnungen 150 der im wesentlichen parallel zueinander liegenden Gehäusewandungen 152 gelagert. Eine Axialsicherung der Achse 90' erfolgt durch einen Gehäusedeckel 154, der mit Rippen 156 eine Axialbewegung der Achse verhindert. Der Deckel ist außerdem mittig mit einem Mittenfixierungsvorsprung 158 versehen, der in eine mittig angeordnete, angepaßte Ausnehmung 160 des Schwenkhebels 86 eingreift. Somit ist es nicht notwendig, zusätzliche Teile für die Lagefixierung der Achse vorzusehen. Entsprechend der Darstellung in Fig. 8 ist der Schwenkhebel 86 an beiden Enden mit einem Lagerzapfen 90 " versehen, welcher angegossen ist. Dieser Lagerzapfen weist eine Schräge 162 auf, die ebenfalls in Öffnungen 150 der parallelen Gehäusewände 152 schwenkgelagert sind. Für die Montage werden die Gehäusewände 152 ein wenig auseinandergespreizt, was durch die Schragen 162 unterstützt wird, wenn der Schwenkhebel 86 mit seinen Zapfen zwischen die Wände eingeschoben wird, damit die Lagerzapfen 90" in die Öffnungen 150 einschnappen. Um hier einen gewünschten Abstand zwischen den parallelen Wänden aufrechtzuerhalten, ohne daß der Schwenkhebel am Gehäuse schleift, wird nach Einsetzen des Schwenkhebels 86 zwischen den Wänden ein Abstandhalter 164 eingesetzt.

Wenn außerhalb der Öffnungen 150 ein Deckel 154 des Gehäuses angeordnet ist, so kann der von der Schräge 162 gebildete Raum 164 als Schmiermitteldepot dienen.

Gemäß Fig. 9a und 9b muß zwischen der Öffnung 150 und dem Lagerzapfen 90" eine Buchse 151, gegebenenfalls eine Stahlbuchse, eingesetzt sein. Wenn diese Stahl buchse erst nach Einrasten des Lagerzapfens 90" eingesetzt wird, führt dies zu einem erleichterten Montieren des Schwenkhebels 86. Außerdem lassen sich die Lagerverhältnisse durch entsprechende Materialauswahl der Buchse besser gestalten.

Aus Fig. 11a und 11b ist ersichtlich, daß in die Klemmfläche 72 des Klemmteiles 32 eine Leiste 120 aus Gummi o.dgl. Material eingelegt ist. Wie der Fig. 11 a zu entnehmen ist, steht diese Gummileiste um einen bestimmten Abstand a über die Zähne der Klemmfläche 72 vor und erstreckt sich in Gurtbandverlaufsrichtung über die gesamte Länge des Klemmteils 32, wie dies der Fig. 11 b deutlich zu entnehmen ist. Die mittige Lage der Leiste hat zur Folge, daß nur eine Gummileiste montiert zu werden braucht. In jedem Falle gelangt das Gurtband zunächst nur in Berührung mit der Leiste 120 und nach deren Verformung erst mit den Zähnen der Klemmfläche 72.

Eine sehr effektive Klemmung ergibt sich dadurch, daß die gegenüberliegende Gegendruckfläche 60 leicht ballig ausgeführt ist. Bei einer entsprechend starken Klemmkraft verformt sich diese Ball igkeit zu einer ebenflächigen Gegendruckfläche. Die Balligkeit kann so sein, daß auf die Breite der Gegendruckfläche eine Balligkeitshöhe h von 0,2 mm vorliegt, wie dies der Fig. 11a zu entnehmen ist.

Wie ebenfalls der Fig. 11a zu entnehmen ist, ragen die Ränder 122 des Gurtbandes 20 um einen Betrag r über die seitliche Begrenzung der Klemmfläche 72 hinaus, so daß die kritischen Ränder des gewebten Gurtbandes 20 nicht durch den Klemmdruck beeinträchtigt werden. Das Klemmteil 32 weist seitliche verformbare Seitenzonen 73 auf, die sich der Verformung anpassen können.

In. Fig. 12 ist eine besondere Ausgestaltung des die Gegendruckfläche 60 bildenden, gehäuseapplizierten Teils 62' dargestellt. Dieses Teil 62' bildet eine einlaufseitige Führung 70 und eine auslaufseitige Führung 70' für das Gurtband, wobei zwischen beiden Führungen sich ein Seitenführungsteil 71'für das Gurtband erstreckt. Der Einlaufschlitz ist mit 71 und der Auslaufschlitz mit 71' bezeichnet.

Fig. 13 zeigt eine besondere Ausführungsvariante des beweglichen Klemmteils 32. Hier ist das Klemmteil zweiteilig ausgebildet, und zwar besteht das Klemmteil 32 aus einem kraftaufnehmenden Grundkörper 33 und einer vorgelagerten Zahnplatte 35 mit den Greifzähnen 74. Diese Greifzähne 74 sind in Fig. 14a, 14b und 15 detaillierter dargestellt.

Die Ausbildung der Greifzähne ist für die Wirksamkeit eines schnellen und schonenden Klemmeingriffs mit dem Sicherheitsgurtband selbst von besonderer Bedeutung, und zwar sowohl hinsichtlich der Materialauswahl, als auch hinsichtlich der Dimensionierung und der Anordnung der Greifzähne. Entsprechend der Darstellung in Fig. 13 bis 15 sind die Greifzähne entgegen der Bewegungsrichtung des Sicherheitsgurtbandes gepfeilt, d.h. die Spitzen der Zähne sind entgegen der Gurtbandabzugsrichtung auf die Gurtbandfläche gerichtet. Dabei haben entsprechend der Darstellung in Fig. 14 und 15 diese Greifzähne eine asymmetrische Pyramidenform. Diese pyramidenförmigen Greifzähne sind in Übereinstimmung mit der Darstellung in Fig. 15 so angeordnet, daß die Zahnspitzen in den Zahnreihen versetzt übereinander angeordnet sind. Dies erfolgt insbesondere in der Anpassung an den besonderen Gewebeaufbau des Sicherheitsgurtbandes.

Die Dimensionierung der Greifzähne ist von besonderer Bedeutung. So hat es sich als vorteilhaft herausgestellt, wenn die Hinterschneidungsfläche 106 der Greifzähne 74 mit der Normalen 110 auf die Gurtbandfläche einen Winkel a von 3° bis 10° einnimmt. Die Tiefe t des Zahnes beträgt ca. 2/3 der Gurtbanddicke und die Zahnhöhe h entspricht dem Schußfadenabstand des gewebten Gurtbandes. Dadurch wird bewirkt, daß die Zähne auf besonders günstige Weise zwischen die Kett- und Schußfäden eingreifen und dabei das Gurt bandgewebe nurgeringfügig belastet. Dadurch ist es möglich, daß ein haüfiger Klemmeingriff erfolgen kann, ohne das Gurtband zu beschädigen.

Da der Kraftangriff zwischen Klemmteil 32 und Klemmfläche 72 bzw. dem gezahnten Bereich 74 in Gurtabzugsrichtung A am auslaufseitigen Ende der Klemmfläche am größten und am Einlaufende am kleinsten ist, hat die Klemmfläche in der in Fig. 16 dargestellten Weise vorzugsweise eine in Gurtabzugsrichtung sich verjüngende Breite, wobei einlaufseitig die Breite vorzugsweise etwas größer ist als die Breite des Gurtbandes 20. Wenn beispielsweise das Gurtband eine Breite von 46 bis 48 mm hat, so soll die einlaufseitige Breite vorzugsweise 50 mm und die auslaufseitige Breite 30 mm betragen. Durch diese Ausgestaltung wird eine gleichmäßigere Beanspruchung des Gurtbandes und somit eine höhere Belastungsfähigkeit erreicht.

Vorzugsweise wird eine Anzahl von ca. 400 Greifzähnen für das Klemmteil verwendet. Die Klemmfläche hat dabei eine Ausdehnung von ca. 25 x 45 mm.

In Fig. 15 sind die Greifzähne entgegen der Gurtabzugsrichtung ausgerichtet und bei Draufsicht auf die Klemmflächenebene des Klemmteils 32 auf einer Linie parallel zur Gurtabzugsrichtung. Entsprechend der Darstellung in Fig. 17a sind die einzelnen Greifzähne 74 in einem spitzen Winkel 8' von ca. 20° Gurtbandlaufrichtung entgegen der Gurtabzugsrichtung ausgerichtet, wobei in Fig. 17a nur ein Zahn dargestellt ist. Gemäß der Darstellung in Fig. 17b befinden sich in Richtung normal zur Gurtbandlaufrichtung und in der Klemmflächenebene zwischen den Zähnen 74 Freiräume x. Im Zusammenhang mit der versetzten Anordnung der Zähne erlauben diese Freiräume einen Halbformschluß zwischen den Kettfäden des Gurtbandes und den Greifzähnen der Klemmfläche, indem sich die Kettfäden Mäanderartig zwischen den Zähnen schlängeln und sich darin verrasten.

Beispielsweise haben die Zähne folgende Abmessungen. Die Abmessung a beträgt vorzugsweise in Abhängigkeit von der Gurtbandwebung ca. 1,7 mm, die Abmessung b ungefähr 1,5 mm und die Abmessung c ungefähr 0,6 bis 0,8 mm. Der Zahnabstand c in Fig. 17b beträgt ca. 1,5 mm, die Zahnhöhe h in Zugrichtung des Gurtbandes beträgt gemäß Fig. 17c ungefähr 1,7 mm. Der Winkel β in Fig. 17c beträgt vorzugsweise 60° und die Zahnhöhe t normal zur Klemmfläche 0,8 mm, d.h. 2/3 der Gurtbanddicke. Die Spitzen sind vorzugsweise mit 0,1 mm Radius abgerundet. Der Zahnspitzenabstand in Zugrichtung des Gurtbandes hängt vom Abstand der Schußfäden im Gurtband ab, wobei die Kettfäden in Längsrichtung des Gurtbandes und die Schußfädsen normal dazu verlaufen. Bekannterweise sind die Kettfäden die kraftaufnehmenden Fäden des Gurtbandes.

Fig. 18 zeigt noch eine weitere abgewandelte Ausführungsform der Zahnanordnung hinsichtlich einer hohen Belastungsfähigkeit, und zwar in Abhängigkeit vom bereits erwähnten differenzierten Kraftangriff, gemäß dem die Zähne mit zunehmendem Kraftanteil in ihrer Höhe abnehmen. Aus Fig. 18 ist beispielsweise ersichtlich, daß die in Zugrichtung stromab liegenden Zähne entgegen der Gurtbandzugrichtung eine zunehmende Höhe haben, und zwar von 0,5 mm über 0,6 mm, 0,7 mm für die ersten drei Zahnreihen und 0,8 mm gleichbleibend für die restlichen Zahnreihen. Die angegebenen Werte entsprechen in der genannten Reihenfolge ca. 40%, 50%, 60% und 2/3 der Gurtbanddicke.

Schließlich zeigen Fig. 19a und 19b zwei Möglichkeiten einer Befestigung des Gurtbandendes im Kern 124 der Spule 45 des Aufrollers. Hierzu ist gemäß Fig. 19a entlang einer außermittigen Sehne ein Durchtrittsschlitz 128 dargestellt, welcher am Befestigungsende mit einer Erweiterung 130 versehen ist und am entgegengesetzten Ende an der ersten Umlenkstelle des Gurtbandes 20 mit einer Ausrundung 132 versehen ist. Entsprechend der Darstellung in Fig. 11a wird das Gurtbandendes 20 durch den Schlitz 128 hindurch gefädelt. Das Ende wird in eine Falte 20' gelegt und mit einer Heftklammer 21 fixiert. Dann wird das Gurtbandende 20 entsprechend dem Pfeil 134 in die Erweiterung 130 hineingezogen. Die Drehrichtung der Spule bei Gurteinzug wird durch den Pfeil 126 angezeigt. Eine derartige Festlegung ist möglich, da die Last immer von den Klemmteilen aufgenommen wird.

Eine andere Ausführungsvariante ergibt sich aus Fig. 19b mit zwei außermittigen Schlitzen 128' und 129, wobei der Schlitz 128' eine Breite von 2 mm und der Schlitz 129 eine Breite von 1,5 mm hat. Der Einfädelschlitz 128 entspricht im wesentlichen dem Einfädelschlitz 128 der Fig. 19a und ist ebenfalls an der entsprechenden Stelle mit einer Ausrundung 132 versehen. Am entgegengesetzten Ende ist zwischen den Schlitzen eine um Gurtdicke zurückversetzte Verzahnung 136 vorgesehen. Auch hier wird das Gurtband an der Seite in den Einfädselschlitz 128' eingeführt, wo die Ausrundung 132 vorgesehen ist. Danach wird das Gurtbandende 20 entsprechend dem Pfeil 140 in den anderen Schlitz 129 eingesetzt. Damit das Ende dort hält, befindet sich über einem Teil des Schlitzes 129 eine Ausnehmung 142, die zwischen sich und dem Schlitz 129 eine flexible Wand 144 bildet, an der ein in den Schlitz 129 ragender Zahn 146 vorgesehen ist, welcher sich in das eingeschobene Gurtbandende 20 verhakt.

Diese Gurtbefestigung im Kern der Spule bzw. im Wellenschaft ist möglich, wenn bei Gurtbandvollauszug der Wellenhub eine Gurtklemmung einleitet und dort die Kraft aufgenommen wird.

## Patentansprüche

1. Sicherheitsgurtsystem mit einem eine Sensor und Steuerungsmechanik aufweisenden Aufroll-und Sperrmechanismus und einer ein gesteuertes Klemmteil aufweisenden Klemmvorrichtung zum Verhindern eines weirteren Gurtbandabzugs vom Aufroll- und Sperrmechanismus, wobei das Klemmteil betriebsmäßig mit einer Relativbewegung des Aufroll- und Sperrmechanismus oder eines Teiles desselben zum Aufrollergehäuse, beispielsweise einer Hub- oder Drehbewegung einer Aufrollspule derart gekoppelt ist, daß durch diese Relativbewegung das Klemmteil in Klemmanlage bewegbar ist, dadurch gekennzeichnet, daß das Klemmteil (32) über einen Schwenkhebel (86) in Anlage an das Gurtband (20) bewegbar ist, daß die Klemmblockierung des Gurtbandes (20) durch das Klemmteil (32) bereits dann über die Blockierung der Sensor-und Steuerungsmechanik erfolgt, wenn die Beschleunigung fahrzeugsensitiv einen niedrigen Grenzwert von ca. 0.45 g (CS) oder gurtbandsensitiv einen niedrigen Grenzwert von ca. 1,5 g (WS) übersteigt und den zugehörigen Sensor auslöst und daß die Klemmenfläche (72) des Klemmteils (32) eine Vielzahl von Einzelzähnen als Greifzähne (74) aufweist, die mit ihrem Abstand an die Lage der Schuß- und Kettfäden des Gurtbandes (20) angepaßt sind, daß eine Rückstellfeder (112) des Klemmteils (32) in ihrer Federkraft nur so stark eingestellt ist, daß die genannte Klemmblockierung bei den genannten niedrigen Beschleinnigungs werten unmittelbar bei niedrigstmöglichen Gürt auszugskräften einleitbar ist, so daß eine schnelle Umsetzung des Sensorimpülses in eine Gurtbandklemmine erfolgt, und daß, die Sensor- und Steuerung mechanik keine unfallbedingten kräfte aufnehmen kann.

2. Sicherheitsgurtsystem nach Anspruch 1, dadurch gekennzeichnet, daß ein gegenüber dem Gurtband (20) angeordneter und auf Druck beaufschlagter Schwenkhebel (86) mit einem darin drehbar gelagerten Klemmteil (32) versehen ist.

3. Sicherheitsgurtsystem nach Anspruch 1, dadurch gekennzeichnet, daß das bewegliche Klemmteil (32) mit einem solchen Reibungswiderstand im Schwenkhebel (86) drehgelagert ist, daß das Klemmteil (32) nach dem erstmaligen Anlegen seiner Klemmfläche (72) an das Gurtband (20) eine solche Winkelrelativstellung zum Schwenkhebel (86) einnimmt und für den weiteren Betrieb beibehält, so daß das Klemmteil (32) stets nur durch die ganze Klemmfläche (72) mit dem Gurtband (20) in Berührung gelangt.

4. Sicherheitsgurtsystem nach einem der Ansprüche 1 bis 3, dadurch gekennzeichnet, daß die Bewegungsübertragung zwischen dem Schwenkhebel (86) und dem diese Bewegung auslösenden Aufroll- und Sperrmechanismus (12) so ist, daß sich die Klemmfläche (72) des Klemmgliedes (32) bei der Annäherung an das Gurtband (20) in derselben Richtungskomponente wie die Gurtbandlaufrichtung mit derselben Geschwindigkeit bewegt wie das Gurtband selbst.

5. Sicherheitsgurtsystem nach einem der Ansprüche 1 bis 4, dadurch gekennzeichnet, daß die Breite der von den Greifzähnen (74) besetzten Klemmfläche normal zur Gurtbandlaufrichtung in Gurtbandlaufrichtung abnimmt.

6. Sicherheitsgurtsystem nach einem der Ansprüche 1 bis 5, dadurch gekennzeichnet, daß in der mit Greifzähnen (74) versehenen Klemmfläche (72) des Klemmteiles (32) eine vorstehende Leiste (120) aus Gummi o.dgl. Material eingelegt ist, die in Gurtbandlaufrichtung entlang der gesamten Klemmfläche verläuft und die die Greifzähne (74) um das Maß a überragt.

7. Sicherheitsgyrtsystem nach einem der Ansprüche 1 bis 6, dadurch gekennzeichnet, daß die Drehachse (96) als Vorsprung von dem drehbaren Klemmteil (32) oder dem Schwenkhebel (86) und eine entsprechende Ausnehmung (104) zur Aufnahme der Drehachse (96) von dem entsprechenden anderen Teil gebildet ist und gegebenenfalls der Öffnungsrand (102) der Ausnehmung (104) den Hateanschlag (100) bildet.

8. Sicherheitsgurtsystem nach Anspruch 7, dadurch gekennzeichnet, daß die Drehachse (96) der Klemmfläche (72) eine abgewandte, teilkreiszylindrische Stange und die Ausnehmung (104) eine entsprechend angepaßte, an mindestens einem Ende offener, längsgeschlitzter Hohlkreiszylinder ist.

9. Sicherheitsgurtsystem nach Anspruch 8, dadurch gekennzeichnet, daß die Schwenklagerfläche der Drehachse (96) eine Kreisumfangserstreckung von gleich oder weniger 180° hat und mit einer entsprechend ausgebildeten konkaven, teilzylindrischen Schwenklagerfläche (104') des Schwenkhebel (86) in Eingriff steht, wobei eine am Schwenkhebel (86) festgelegte Klemmteilfeder (112) am Klemmteil (32) eingreift und die Verbindung der beiden Teile (32, 86) bewirkt.

10. Sicherheitsgurtsystem nach Anspruch 9, dadurch gekennzeichnet, daß die Klemmteilfeder (112) um eine Angriffsstelle (103) am Klemmteil (32) geführt ist und sich an einer festen Gehäusestelle (118) abstützt.

11. Sicherheitsgurtsystem nach Anspruch 10, dadurch gekennzeichnet, daß die Klemmteilfeder (112') an einer Stelle (103') am Klemmteil (32) angreift, die auf der Drehachse (96') des Klemmteils (32) liegt.

12. Sicherheitsgurtsystem nach einem der Ansprüche 1 bis 11, dadurch gekennzeichnet, daß der Schwenkhebel (86) mittels einer Achse (90') in parallelen Gehäusewänden (152) ohne Berührung zu diesen gelagert ist und in einem Gahäusedeckel (154) ein Mittenfixierungsvorsprung (158) ausgebildet ist, der in eine entsprechende Ausnehmung (160) des Schwenkhebels (86) greift, und daß die Achse (90') gegen axiales Verschieben durch den Gehäusedeckel (154) gesichert ist.

13. Sicherheitsgurtsystem nach einem der Ansprüche 1 bis 12 dadurch gekennzeichnet, daß der Schwenkhebel (86) beidseits einstückig mit diesem ausgebildete Lagerzapfen (90") aufweist, die mit Schrägen (162) versehen sind und in entsprechende Öffnungen (150) von parallelen Gehäusewänden (152) durch Auseinanderspreizen dieser Wände einrastbar sind, und daß diese Gahäusewände nach Einsetzen des Schwenkhebels (86) über eine Abstandshalterung (164') verbunden werden.

14. Sicherheitsgurtsystem nach Anspruch 13, dadurch gekennzeichnet, daß zwischen dem Lagerzapfen (90") und den in der Gehäusewand (152) befindlichen Bohrung (150) eine Lagerbüchse (151) sitzt.

15. Sicherheitsgurtsystem nach einem der Ansprüche 1 bis 14, dadurch gekennzeichnet, daß zwischen dem die genannte Bewegung des Schwenkhebels (86) auslösenden Aufroll- und Sperrmechanismus (12) und dem Schwenkhebel (86) ein gehäuseseitig drehbar gelagerter Betätigungshebel (170) angeordnet ist, der in seiner Ruhelage ein freies Drehen des Aufroll- und Sperrmechanismus zuläßt (Fig. 5).

16. Sicherheitsgurtsystem nach einem der Ansprüche 1 bis 15 dadurch gekennzeichnet, daß die Gegendruckfläche (60) von einem gesonderten, gehäuseapplizierten Teil (62) gebildet ist, das aus einem Material mit besonders geringem Reibungsbeiwert besteht.

17. Sicherheitsgurtsystem nach Anspruch 16, dadurch gekennzeichnet, daß das gehäuseapplizierte Teil (62)zugleich eine Gurtbandführung (70; 70') einlaufseitig und/« der auslaufseitg bildet.

18. Sicherheitsgurtsystem nach einem der Ansprüche 1 bis 17, dadurch gekennzeichnet, daß die Gegendruckfläche (60) geballt ausgeführt ist.

19. Sicherheitsgurtsystem nach einem der Ansprüche 1 bis 18, dadurch gekennzeichnet, daß das gehäuseapplizierte Teil (62) aus einem Kunststoffteil besteht, in das von hinten mehrere Metallstege zur Widerstandserhöhung gegen Durchbiegen derGehäuserückwand (64) einsetzbar sind.

20. Sicherheitsgurtsystem nach einem der Ansprüche 1 bis 19, dadurch gekennzeichnet, daß das Gurtbandende (20) durch einen außermittigen Durchgangsschlitz (128) des Wickelspulenkerns (124) des Aufrollers geführt und mit einem verdickten Ende (20') in einer Erweiterung (130) des Durchgangsschlitzes (128) sitzt.

21. Sicherheitsgurtsystem nach einem der Ansprüche 1 bis 20, dadurch gekennzeichnet, daß das Gurtbandende (20) durch einen Durchgangsschlitz (128') auf einer Seite der Drehachse durch den Wickelspulenkern (124) des Aufrollers geführt und anschließend über eine Halteverzahnung (136) in eine Halteschlitz (129) auf der anderen Seite der Drehachse eingeführt ist.

22. Sicherheitsgurtsystem nach Anspruch 21, dadurch gekennzeichnet, daß im Halteschlitz (129) mindestens ein Haltevorsprung (146) in den Halteschlitz (129) ragt.

## Revendications

1. Système de ceinture de sécurité comportant un mécanisme d'enroulage et de blocage présentant une mécanique de capteur et de commande et comportant un dispositif de serrage présentant une partie de serrage commandée en vue d'empêcher un déroulement supplémentaire de la bande de ceinture par le mécanisme d'enroulement et de blocage, la partie de serrage étant accouplée fonctionnellement à un mouvement relatif du mécanisme d'enroulement et de blocage ou une partie de ce dernier par rapport au boîtier de l'enrouleur, par exemple à un mouvement de course et de rotation d'une bobine d'enroulement, de façon que la partie de serrage soit mobile en appui de serrage, du fait de ce mouvement relatif, caractérisé en ce que la partie de serrage (32) est mobile en appui sur la bande de la ceinture (20), par l'intermédiaire d'un levier de pivotement (86), en ce que le blocage avec serrage de la bande de ceinture (20) par la partie de serrage (32) s'effectue déjà par l'intermédiaire du blocage de la mécanique de capteur et de commande lorsque l'accélération mesurée sur le véhicule dépasse une valeur limite inférieure d'à peu près 0,45 g (CS) ou une valeur limite inférieure d'à peu près 1,5 g (WS) si l'on effectue la mesure sur la bande de la ceinture et déclenche le capteur respectif et en ce que la face de serrage (72) de la partie de serrage (32) présente un grand nombre de dents individuelles servant de dents de prises (74), dont l'écartement est adapté aux fils de trame et de chaîne de la bande de ceinture (20), en ce qu'un ressort de rappel (112) de la partie de serrage (32) est réglé à une force élastique juste suffisante pour que ledit blocage par serrage soit immédiatement mis en oeuvre, en présence desdites faibles valeurs d'accélération et à des forces d'extraction de la ceinture les plus faibles, de sorte qu'une commutation rapide de l'impulsion de capteuren un serrage de la bande de ceinture peut s'effectuer et en ce que le mécanisme de capteur et de commande ne peut pas accepter des forces associées à un accident.

2. Système de ceinture de sécurité selon la revendication 1 , caractérisé en ce qu'un levier pivotant (86) disposé en face de la bande de ceinture (20) et sollicité en pression est pourvu d'une partie de serrage (32) montée tournante à l'intérieur.

3. Système de ceinture de sécurité selon la revendication 1, caractérisé en ce que la partie de serrage (32) mobile est montée tournante dans le levier pivotant (86), avec une résistance au frottement telle que la partie de serrage (32) prend par rapport au levier pivotant (86) une position angulaire relative telle, après la première application de sa face de serrage (72) sur la bande de ceinture (20), et contribue de telle façon à la suite du fonctionnement, que la partie de serrage (32) arrive en permanence en contact avec la bande de ceinture (20) uniquement par la totalité de la face de serrage (72).

4. Système de ceinture de sécurité selon l'une des revendications 1 à 3, caractérisé en ce que la transmission du mouvement entre le levier pivotant (86) et le mécanisme d'enroulement et de blocage ( 12 ) déclenchant ce mouvement est telle que la face de serrage (72) de l'organe de serrage (32) se déplace à la même vitesse que la bande de ceinture lors de l'approche sur la bande de ceinture (20), avec la même composante directionnelle que la direction de défilement de la bande de ceinture.

5. Système de ceinture de sécurité selon l'une des revendications 1 à 4, caractérisé en ce que la largeur de la face de serrage (72) de la partie de serrage (32) qui est munie des dents de prise (74) diminue perpendiculairement à la direction de défilement de la bande de ceinture dans le sens du défilement de la ceinture.

6. Système de ceinture de sécurité selon l'une des revendications 1 à 5, caractérisé en ce que, dans la face de serrage (42) de la partie de serrage (32) qui est pourvue de dents de prise (74), il est introduit une bande en saillie (120) en caoutchouc ou matériau similaire, s'étendant dans la direction de défilement de la bande de ceinture, le long de la totalité de la face de serrage et dépassant les dents de prise (74) de la valeur a.

7. Système de ceinture de sécurité selon l'une des revendications 1 à 6, caractérisé en ce que l'axe de rotation (96) est formé en saillie de la partie de serrage (32) tournante ou du levier pivotant (86) et qu'il est formé un évidement (104) correspondant destiné à recueillir l'axe de rotation (96) provenant de l'autre partie correspondante et le bord d'ouverture (102) de l'évidement (104) formant le cas échéant la butée de maintien (100).

8. Système de ceinture de sécurité selon la revendication 7, caractérisé en ce que l'axe de rotation (96) de la face de serrage (72) est une tige opposée, partiellement cylindrique, et l'évidement (104) est un cylindre creux fendu longitudinalement, adapté en correspondance, ouvert au moins à une extrémité.

9. Système de ceinture de sécurité selon la revendication 8, caractérisé en ce que la face de palier pivotant de l'axe de rotation (96) présente une circonférence égale ou inférieure à 180° et est en prise avec une face de palier pivotant (104'), partiellement cylindrique et d'une concavité correspondante, du levier pivotant (86), un ressort de partie de serrage (112) fixé sur le levier pivotant (86) s'engageant sur la partie de serrage (32) et provoquant la liaison des deux parties (32, 86).

10. Système de ceinture de sécurité selon la revendication 9, caractérisé en ce que le ressort de partie de serrage (112) est guidé autour d'un point de prise (103) situé sur la partie de serrage (32) et s'appuie sur un point du boîtier fixe (118).

11. Système de ceinture de sécurité selon la revendication 10, caractérisé en ce que le ressort de partie de serrage (112') est en prise sur un point (103') de la partie de serrage (32) situé sur l'axe de rotation (96') de la partie de serrage (32).

12. Système de ceinture de sécurité selon l'une des revendications 1 à 11, caractérisé en ce que le levier pivotant (86) est monté à l'aide d'un axe (90') dans des parois de boîtier (152) parallèles, sans aucun contact avec ces dernières, et une saillie de fixation centrale (158), en prise dans un évidement (160) correspondant du levier pivotant (86), étant réalisée dans un couvercle de boîtier (154), et en ce que l'axe (90') est fixé au moyen du couvercle de boîtier (154) contre tout déplacement axial.

13. Système de ceinture de sécurité selon l'une des revendications 1 à 12, caractérisé en ce que le levier pivotant (86) présente des deux côtés des tourillons de palier (90") réalisés d'une seule pièce avec ce dernier, tourillons pourvus de pentes (162) et encliquetables dans des orifices correspondants (150) de parois de boîtier (152) parallèles, par écartement d'une de l'autre de ces parois de boîtier, et en ce que ces parois de boîtier sont reliées par l'intermédiaire d'une fixation à entretoise (164') après introduction du levier pivotant (86).

14. Système de ceinture de sécurité selon la revendication 13, caractérisé en ce qu'un coussinet de palier (151) repose entre le tourillon de palier (90") et l'alésage (150) se trouvant dans la paroi du boîtier (152).

15. Système de ceinture de sécurité selon l'une des revendications 1 à 14, caractérisé en ce qu'un levier d'actionnement (170) monté tournant côté boîtier est disposé entre le mécanisme d'enroulement et de blocage (12) déclenchant le mouvement cité du levier pivotant (86) et le levier pivotant (86), levier (170) permettant dans sa position de repos une rotation libre du mécanisme d'enroulement et de blocage (figure 5).

16. Système de ceinture de sécurité selon l'une des revendications 1 à 15, caractérisé en ce que la contre-surface de pression (60) est formée par une partie (62) séparée appliquée sur la boîtier, se composant d'un matériau à coefficient de frottement particulièrement faible.

17. Système de ceinture de sécurité selon la revendication 16, caractérisé en ce que la partie (62) appliquée sur la boîtierforme en même temps un guidage de bande de ceinture (70;70') côté entrée et/ou côté sortie.

18. Système de ceinture de sécurité selon l'une des revendications 1 à 17, caractérisé en ce que la contre-surface de pression (60) est bombée.

19. Système de ceinture de sécurité selon l'une des revendications 1 à 18, caractérisé en ce que la partie appliquée sur le boîtier (62) se compose d'une partie en matière plastique dans laquelle plusieurs nervures métalliques sont susceptibles d'être introduites par l'arrière en vue d'accroître la résistance à la flexion de la paroi arrière de boîtier (64).

20. Système de ceinture de sécurité selon l'une des revendications 1 à 19, caractérisé en ce que l'extrémité de la bande de ceinture (20) est guidée dans une fente de passage excentrée (128) du noyau de la bobine d'enroulement (124) de l'enrouleur et repose avec son extrémité épaissie (20') dans un agrandissement (130) de la fente de passage (128).

21. Système de ceinture de sécurité selon l'une des revendications 1 à 20, caractérisé en ce que l'extrémité de la bande de ceinture (20) est guidée dans une fente de passage (128') sur une face de l'axe de rotation, dans le noyau de la bobine d'enroulement (124) de l'enrouleur et est immédiatement introduite par l'intermédiaire d'une denture de maintien (136) dans une fente de maintien (129) située sur l'autre face de l'axe de rotation.

22. Système de ceinture de sécurité selon la revendication 21, caractérisé en ce qu'au moins une saillie de maintien (146) située dans la fente de maintien (129) dépasse dans la fente de maintien (129).

## Claims

1. Safety-belt system comprising a belt and a winding and locking device having a sensing and control mechanism and a clamping device having a controlled clamping portion for preventing a further belt withdrawal from the winding and locking device, said clamping portion being operatively coupled to a movement of the winding and locking device or a part thereof relative to the winding housing, for example a lifting or rotating movement of the winder reel, so that responsive to this relative movement the clamping portion is movable into clamping position, characterized in that the clamping portion (32) is movable into engagement with the belt (20) by means of a rocking lever (86), in that the clamp locking of the belt (20) by the clamping portion (32) takes place via locking of the sensing and control mechanism as soon as the acceleration exceeds car-sensitively a lower limit value of about 0.45 g (CS) or belt- sensitively a lower limit value of about 1.5.g (WS) and causes response of the relevant sensor, and in that the clamp surface (72) of the clamping portion (32) has a plurality of individual teeth as gripping teeth (74), which are adapted in their spacing to the warp and weft fibres of the belt (20), in that a return spring (112) of the clamping portion (32) has its spring force adjusted only to such value that said clamp blocking can be directly initiated at the said low acceleration values with the lowest possible belt withdrawal forces, so that rapid conversion occurs of the sensor momentum into a belt clamping action, and in that the sensing and control mechanism cannot absorb forces resulting from an accident.

2. Safety-belt system according to claim 1, characterised in that a pressure loaded rocking lever (86) arranged opposite the belt is provided with a clamping portion (32) rotatably mounted therein.

3. Safety-belt system according to claim 1, characterised in that the movable clamping portion (32) is rotatably mounted with a frictional resistance in the rocking lever (86) such that the clamping portion (32) adopts after its first engagement of its clamping surface (72) on the belt (20) an angular position relative to the rocking lever (86), which it maintains for further operation, such that the clamping portion (32) always only comes into contact with the belt (20) over its entire clamping surface (72).

4. Safety-belt system according to any of claims 1 to 3, characterised in that the transmission of movement between the rocking lever (86) and the winding and locking device (12) which initiates said movement is such that the clamping surface (72) of the clamping member (32) when approaching the belt (20) moves in the same directional component as the direction of movement of the belt at the same speed as the belt itself.

5. Safety-belt system according to any of claims 1 to 4, characterised in that the width of the clamping surface occupied by the gripper teeth (74) normal to the direction of movement of the belt decreases in the direction of movement of the belt.

6. Safety-belt system according to any of claims 1 to 5 wherein in the clamping surface (72) which is provided with gripper teeth (74) of the clamping portion (32) a projecting strip (120) of rubber or similar material is inserted which extends in the direction of movement of the belt along the entire clamping surface and which projects beyond the gripper teeth (74) by the distance a.

7. Safety-belt system according to any of claims 1 to 6, characterised in that the rotational axis (96) is formed as a projection from the rotatable clamping portion (32) or the rocking lever (86) and a corresponding recess (104) is formed for reception of the rotational axis (96) of the corresponding other part and in certain circumstances the opening edge (102) of the recess (104) forms the retainer stop (100).

8. Safety-belt system according to claim 7, characterised in that the rotational axis (96) of the clamping surface (72) is a part-circular- cylindrical rod facing away from the clamping surface and the recess (104) is a correspondingly adapted longitudinally hollow cylinder which is open at at least one end.

9. Safety-belt system according to claim 8, characterised in that the pivotal bearing surface of rotational axis (96) has a peripheral extension equal to or less than 180° and is engaged with a correspondingly designed concave part-circular- cylindrical pivotal bearing surface (104') of the rocking lever (86) whereby a clamping portion spring (112) fixed on the rocking lever (86) engages on the clamping portion (32) and connects the two parts (32,86).

10. Safety-belt system according to claim 9, characterised in that the clamping portion spring (112) is guided around an engagement point (103) on the clamping portion (32) and is supported on a fixed housing point (118).

11. Safety-belt system according to claim 10, characterised in that the clamping portion spring (112') engages on a point (103') on the clamping portion (32) which is on the rotational axis (96') of the clamping portion (32).

12. Safety-belt system according to any of claims 1 to 11, characterised in that the rocking lever (86) is supported by means of an axle (90') in parallel housing walls (152) without contact with the latter and in a housing cover (154) a centre-fixing projection (158) is provided which engages in a corresponding recess (16) of the rocking lever (86), and the axle (90') is secured against axial displacement by the housing cover (154).

13. Safety-belt system according to any of claims 1 to 12, characterised in that the rocking lever (86) has, on both sides and integral therewith, bearing pins (90") which are provided with bevels (162) and can be latched into corresponding apertures (150) of the parallel housing walls (152) by spreading these walls apart and these housing walls are connected after insertion of the rocking lever (86) by a spacing holder (164').

14. Safety-belt system according to claim 13, characterised in that between the bearing pins (90") and the bore (150) located in the housing wall (152) a bearing bushing (151) is disposed.

15. Safety-belt system according to any of claims 1 to 14, characterised in that between the named winding and locking device (12) which initiates the movement of the rocking lever (86) and the rocking lever (86) itself an actuating lever (170) is rotatably mounted on the housing side which it its idle position permits free rotation of the winding and locking device (Fig. 5).

16. Safety-belt system according to any of claims 1 to 15, characterised in that the counter-pressure surface (60) is made from a separate portion (62) applied on the housing, which consists of a material with an especially low frictional coefficient.

17. Safety-belt system according to claim 16, characterised in that the portion (62) applied on the housing simultaneously forms a belt guide (70;70') on the entry side and/or on the exit side.

18. Safety-belt system according to any of claims 1 to 17, characterised in that the counter-pressure surface (60) is rounded.

19. Safety-belt system according to any of claims 1 to 18, characterised in that the housing-applied portion (62) consists of a plastics portion in which from the rear a plurality of metal bars can be inserted for increased resistance to the bending of the rear wall (64) of the housing.

20. Safety-belt system according to any of claims 1 to 19, characterised in that the end (20) of the belt is guided by an eccentric through slot (128) of the winding reel core (124) of the winder and is disposed with one thickened end (20') in an expansion (130) of said through slot (128).

21. Safety-belt system according to any of claims 1 to 20, characterised in that the end (20) of the belt is guided through a through slot (128') on one side of the rotational axle through the winding reel core (124) of the winder and then enters via a retainer indentation (136) in a retaining slot (129) on the other side of the rotational axle.

22. Safety-belt system according to claim 21, characterised in that at least one retainer projection (146) in the retainer slot (129) projects into the retainer slot (129).
